# EUROPÄISCHE PATENTANMELDUNG

(11) **EP 2 503 354 A1**
(43) Veröffentlichungstag der Anmeldung: **26.09.2012**
(21) Anmeldenummer: 12160055.5
(22) Anmeldetag: 19.03.2012
(51) Int. Cl.: G01S 15/02

(54) **Selbstbedienungs-Terminal und Verfahren zur Überwachung eines Benutzer-Aufenthaltsbereichs**

(30) Priorität: 24.03.2011 DE 102011001541
(71) Anmelder: Wincor Nixdorf International GmbH, 33106 Paderborn (DE)
(72) Erfinder: Priesterjahn, Steffen, 33100 Paderborn (DE); Drichel, Alexander, 33613 Bielefeld (DE)
(74) Vertreter: 2K Patentanwälte Blasberg Kewitz & Reichel

(57) **Zusammenfassung**

Vorgeschlagen werden ein Selbstbedienungs-Terminal (10) und ein Verfahren zur Überwachung eines Aufenthaltsbereichs (20), in dem sich ein Benutzer (1) bei der Bedienung des Selbstbedienungs-Terminals (10) aufhält, wobei das Selbstbedienungs-Terminal ein Bedienfeld zur Bedienung des Selbstbedienungs-Terminals durch den Benutzer (1) aufweist, einen Bildschirm zur Anzeige von Informationen für den Benutzer (1) aufweist und mindestens eine Kamera (13) zur Überwachung des Aufenthaltsbereichs (20) aufweist. Das Verfahren zur Überwachung des Aufenthaltsbereichs (20) wird von einer mit der Kamera (13) verbundenen Bildverarbeitungs-Vorrichtung durchgeführt, wobei erkannt wird, ob sich in dem Aufenthaltsbereich (20) des Benutzers (1) wenigstens eine weitere Person (2, 2') befindet, und wobei das Auslösen einer Alarmmeldung auf dem Bildschirm des Selbstbedienungs-Terminals (10) veranlasst wird.

## Beschreibung

Die Erfindung betrifft ein Selbstbedienungs-Terminal nach dem Oberbegriff des Anspruchs 1 sowie ein von dem Selbstbedienungs-Terminal durchgeführtes Verfahren zur Überwachung eines Benutzer-Aufenthaltsbereichs.

Selbstbedienungs-Terminals sind beispielsweise in Form von Geldautomaten, Kontoauszugsdruckern sowie Informations-und/oder Transaktionsterminals in den verschiedensten Ausführungen bekannt. Die Selbstbedienungs-Terminals, im Weiteren auch kurz SB-Terminals genannt, weisen ein für den jeweiligen Verwendungszweck gestaltetes Gehäuse auf, in dem ein Bedienfeld angeordnet ist. Das Bedienfeld ist in einer für die Benutzer ergonomisch günstigen Position angeordnet und weist Komponenten auf wie z.B. Bildschirm bzw. Display, Tastatur, Kartenleser, Geldausgabefach usw.. Die Tastaturen dienen u.a. zur Eingabe von Ziffernkombinationen, insbesondere von PINs (Personal Identification Numbers), und befinden sich häufig neben oder unter dem Bildschirm. Die Tastaturen können auch im Bildschirm als sogenanntes Touch-Screen integriert sein.

An Selbstbedienungs-Terminals, insbesondere an Geldautomaten, werden häufig kriminelle Handlungen in Form von Manipulationen vorgenommen, die das Ziel verfolgen, sensitive Daten, insbesondere Kartendaten (Magnetstreifen) und PINs, von Benutzern des SB-Terminals auszuspähen. Dazu werden sogenannte Skimming-Vorrichtungen, im Bedienbereich bzw. Bedienfeld widerrechtlich installiert, mit denen z.B. die Daten vom Magnetstreifen einer Benutzer-Karte abgelesen werden können bzw. mit denen der Magnetstreifen als Ganzes zwecks Kopie ausgespäht werden kann. Das Ausspähen von PINs erfolgt z.B. mit Hilfe von Tastaturüberbauten oder aber durch ein simples visuelles Ausspähen. Dazu stellt sich der Kriminelle in die Nähe des Benutzers während der Bedienung des SB-Terminals, wobei sich der Kriminelle wie ein wartender Benutzer verhält, um nicht aufzufallen. Der Kriminelle (Betrüger) versucht dann die Tastatur-Eingabe der PIN auszuspähen.

Um solche Ausspähungs-Versuche zu behindern, werden häufig mechanische Vorbauten in Form eines Sichtschutzes am Bedienfeld oder an der Front des Geldautomaten montiert. Nachteilig an solchen Sichtschutzvorbauten ist, dass der Benutzer eines Geldautomaten sich stets umblicken muss, um erkennen zu können, ob eine hinter ihm stehende Person versucht, seine PIN-Nummer auszuspähen.

In der DE 10 2008 031 281 A1 wird ein Selbstbedienungs-Terminal beschrieben, das mit einer Überwachungs-Vorrichtung in Gestalt einer Kamera ausgestattet ist, die zur Überwachung eines Aufenthaltsbereichs dient, in dem sich der Benutzer bei der Bedienung des Selbstbedienungs-Terminals aufhält. Das von der Kamera erzeugte Kamerabild wird auf dem Bildschirm des Benutzers angezeigt, z.B. als Bild-in-Bild-Darstellung. Somit kann der Benutzer, ohne sich umdrehen zu müssen, bei der Eingabe von sensitiven Daten erkennen, ob jemand hinter ihm steht. Allerdings muss der Benutzer dazu das Kamerabild genau beobachten, was ihn wiederum von der korrekten Bedienung des SB-Terminals ablenkt. Wünschenswert wäre eine Lösung, bei der visuelle Ausspäh-Versuche für den Benutzer schnell erkennbar anzeigt werden.

In der US 2004/012773 A1 wird lediglich vorgeschlagen, seitlich an dem Geldautomatengehäuse Spiegel anzubringen, mit der betrügerische Absichten erkannt werden können. Diese Lösung kann zwar kostengünstig realisiert werden, allerdings kann der Betrüger über die Spiegel jederzeit eine Änderung der Blickrichtung des Geldautomaten-Benutzers erkennen, so dass der Betrüger durch eine solche Änderung der Blickrichtung des Benutzers vorgewarnt wird und seine Ausspäh-Versuche sofort einstellen kann.

Der Erfindung liegt die Aufgabe zugrunde, ein Selbstbedienungs-Terminal der eingangs genannten Art so zu verbessern, dass visuelle Ausspäh-Versuche für den Benutzer sicher und schnell erkennbar angezeigt werden.

Die gestellte Aufgabe wird durch ein Selbstbedienungs-Terminal mit den Merkmalen des Anspruches 1 gelöst sowie durch ein Verfahren mit den Merkmalen des nebengeordneten Anspruchs.

Demnach wird ein Selbstbedienungs-Terminal vorgeschlagen, das eine mit der Kamera verbundene Bildverarbeitungs-Vorrichtung aufweist, die erkennt, ob sich in dem Aufenthaltsbereich des Benutzers eine weitere Person befindet und, wenn dies der Fall ist, das Auslösen einer Alarmmeldung veranlasst.

Das vorgeschlagene Verfahren zur Überwachung des Aufenthaltsbereichs wird von der Bildverarbeitungs-Vorrichtung durchgeführt, wobei erkannt wird, ob sich in dem Aufenthaltsbereich des Benutzers eine weitere Person befindet, und wobei in diesem Fall das Auslösen einer Alarmmeldung veranlasst wird.

Somit wird die Benutzung des SB-Terminals vor Ausspäh-Versuchen geschützt durch eine automatische Erkennung und des Zustandes, dass sich wenigstens eine weitere Personen, d.h. ein potentieller Betrüger, im Aufenthaltsbereich befindet, und durch automatische Alarmierung des Benutzers, der demzufolge nicht selbst Aufmerksamkeit verwenden und feststellen muss, ob die konkrete Gefahr besteht, ausgespäht zu werden. Insbesondere muss der Benutzer sich nicht mehr umdrehen oder das Kamerabild beobachten, um festzustellen, ob hinter seinem Rücken sich ein potentieller Betrüger befindet oder nicht.

Besonders vorteilhafte Ausgestaltungen der Erfindung ergeben sich aus den Unteransprüchen.

Demnach ist es besonders vorteilhaft, wenn die Bildverarbeitungs-Vorrichtung die von der Kamera erzeugten Bildaufnahmen mittels einer Gesichtsdetektion verarbeitet, um Anzahl, Position, Lage und/oder Blickrichtung von detektierten Gesichtern weiterer Personen zu bestimmen und in Abhängigkeit davon die Alarmmeldung auszulösen. Somit werden vorgebare Kriterien mittels Gesichtsdetektion automatisch bewertet, um nur dann den Alarm auszulösen, wenn diese Kriterien erfüllt sind.

In diesem Zusammenhang wird beispielsweise die Alarmmeldung nur dann ausgelöst, wenn die Anzahl der detektierten Gesichter, insbesondere die Anzahl der in einem ersten Bereich (Nahbereich) detektierten Gesichter, zumindest den Wert 2 beträgt. Demnach wird geprüft, ob sich neben dem Benutzer noch mindestens eine weitere Person im Nahbereich des SB-Terminals aufhält. Alternativ oder ergänzend dazu kann als Kriterium auch geprüft werden, ob die Anzahl derjenigen detektierten Gesichter, deren Blickrichtung zum Bedienfeld hin zeigt, zumindest den Wert 2 beträgt.

Vorzugsweise wird die Alarmmeldung selbst auf dem Bildschirm des Selbstbedienungs-Terminals dargestellt bzw. angezeigt, z.B. in Form einer optischen Warnmeldung. Die von der Kamera erzeugten Bildaufnahmen können als Bild-in-Bild-Darstellung auf dem Bildschirm dargestellt werden. In diesem Zusammenhang ist es vorteilhaft, wenn die Bildverarbeitungs-Vorrichtung im Alarmfall auch veranlasst, die Bild-in-Bild-Darstellung optisch hervorzuheben, so dass der Benutzer sofort den Alarmfall erkennt.

Bevorzugt wird geprüft, ob sich weitere Personen im Nahbereich des Benutzers befinden oder nicht. Dazu wird vorgeschlagen, dass die Bildverarbeitungs-Vorrichtung mittels der von der Kamera erzeugten Bildaufnahmen bestimmt, ob weitere Personen sich in einem ersten Bereich des Aufenthaltsbereich befinden, der näher als ein zweiter Bereich des Aufenthaltsbereich an dem Selbstbedienungs-Terminal liegt, um in Abhängigkeit davon die Alarmmeldung auszulösen. Der Aufenthaltsbereich wird also in einen Nahbereich und einen Fernbereich unterteilt, wobei der Nahbereich quasi die "private Zone" des Benutzers definiert, in welcher sich keine weitere Person befinden sollte. Vorzugsweise ist die Kamera eine in dem Selbstbedienungs-Terminal installierte und auf den Benutzer ausgerichtete Portrait-Kamera. Somit wird die, insbesondere bei Geldautomaten, häufig bereits vorhandene Portrait-Kamera genutzt, um auch eine sichere automatisierte Erkennung und Alarmierung von Ausspäh-Versuchen zu realisieren.

Ob die Situation eines Ausspäh-Versuches vorliegen könnte oder nicht, wird beispielsweise dadurch verifiziert, dass mittels Vergleich von in den Bildaufnahmen erfassten Gesichtern, insbesondere mittels Vergleich von Gesichtsgröße, Bildschärfe und/oder Hell-Dunkel-Werte, bestimmt wird, ob weitere Personen sich in dem ersten Bereich oder dem zweiten Bereich des Aufenthaltsbereich befinden. Somit kann durch die Bildverarbeitung selbst verifiziert werden, ob sich weitere Personen (potentielle Betrüger) im Nahbereich bzw. in der "privaten Zone" des Benutzers aufhalten.

Alternativ oder ergänzend dazu kann dieser Zustand auch mittels einer Abstandsmessung zwischen dem Selbstbedienungs-Terminal und den erfassten Gesichtern erkannt werden, wobei mittels der Abstandsmessung bestimmt wird, ob weitere Personen sich in dem ersten Bereich (Nahbereich) oder dem zweiten Bereich (Fernbereich) des Aufenthaltsbereichs befinden. Die Abstandsmessung kann z.B. mittels eines Sensors, insbesondere Infrarot- oder Ultraschall-Sensors, durchgeführt werden.

Die Erfindung und die sich daraus ergebenden Vorteile werden nachfolgend im Detail anhand eines Ausführungsbeispiels beschrieben, wobei auf die beiliegenden schematischen Zeichnungen Bezug genommen wird, die folgendes darstellen:
- Fig. 1: zeigt ein Ausführungsbeispiel eines erfindungsgemäßen Selbstbedienungs-Terminals in Form eines Geldautomaten und davor befindliche Personen;
- Fig. 2: zeigt in einer schematischen Draufsicht den Aufenthaltsbereich vor dem Selbstbedienungs-Terminal, wobei sich mehrere Personen in verschiedenen Bereichen (Abschnitten) des Aufenthaltsbereichs befinden;
- Fig. 3: veranschaulicht die Anzeige von mehreren Informationen bzw. Bildern auf dem Bildschirm des Selbstbedienungs-Terminals, wobei eine Alarm- bzw. Warnmeldung und eine Bild-in-Bild-Darstellung des Kamerabildes angezeigt werden; und
- Fig. 4: stellt ein schematisches Ablaufdiagram für das erfindungsgemäße Verfahren zur Überwachung des Aufenthaltsbereichs dar.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung sowie Position des Selbstbedienungs-Terminals und seiner Komponenten. Diese Begriffe sind nicht einschränkend zu verstehen, d.h. dass in verschiedenen Arbeitsstellungen oder durch spiegelsymmetrische Auslegung oder dergleichen sich diese Bezüge ändern können.

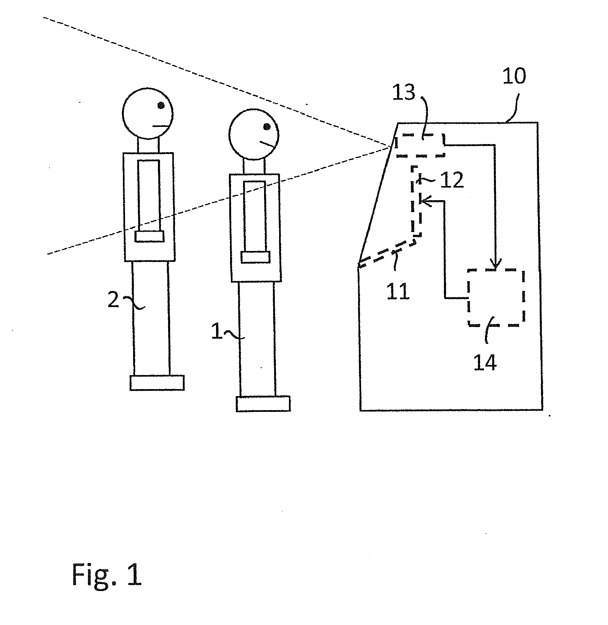

Das in der Fig. 1 dargestellte Selbstbedienungs-Terminal 10 ist in dem vorliegenden Beispiel als Geldautomat ausgestaltet und weist ein Grundgehäuse auf, in dem insbesondere folgende Komponenten bzw. Bereiche angeordnet sind:

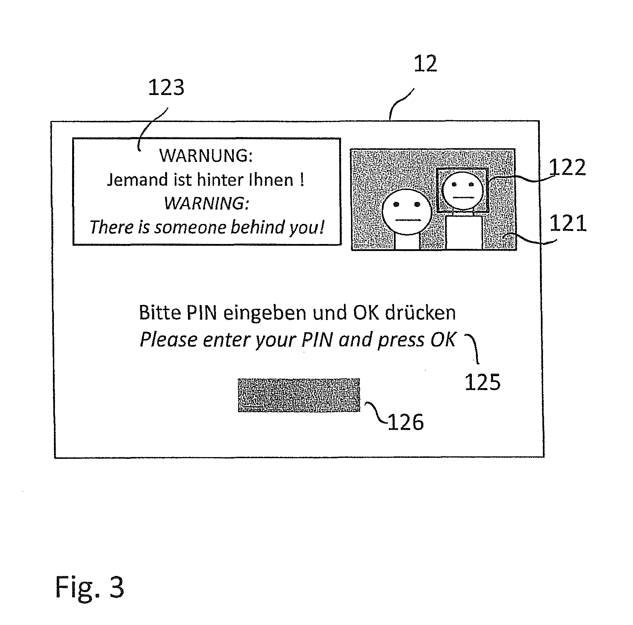

An der Vorderseite (Bedienerseite) des Geldautomaten 10 befindet sich ein Bedienfeld 11, das u.a. eine Tastatur zur allgemeinen Bedienung und für konkrete Benutzer-Eingaben aufweist. Darüber ist ein Bildschirm 12 angeordnet, auf dem Informationen für den Benutzer 1 während der Benutzung bzw. Durchführung von Transaktionen dargestellt werden. Zur Vereinfachung der Darstellung werden weitere Komponenten, wie z.B. Kartenleser, Geldausgabefach usw., hier nicht dargestellt. Während der Ausführung einer Transaktion befindet sich der Benutzer 1 unmittelbar vor dem Geldautomaten 10 und wird beispielsweise per Bildschirmanzeige aufgefordert (s. auch Fig. 3), seine PIN an der Tastatur einzugeben.

Der Geldautomat bzw. das SB-Terminal 10 kann mittels einer Kamera 13 und einer damit verbundenen Bildverarbeitungs-Vorrichtung 14 automatisch erkennen und anzeigen, wenn der Benutzer 1 von mindestens einer Person beobachtet wird, die sich in der Nähe des Benutzers 1, insbesondere direkt hinter ihm, befindet, und somit ein potentieller Betrüger sein könnte.

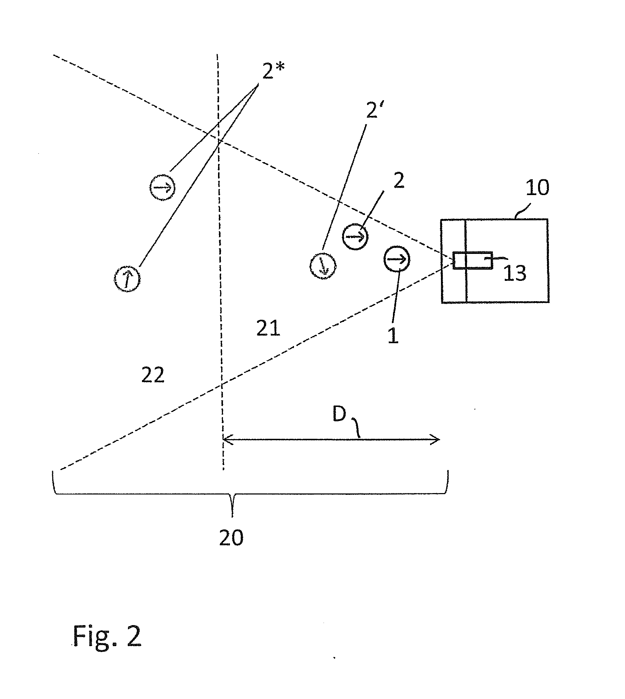

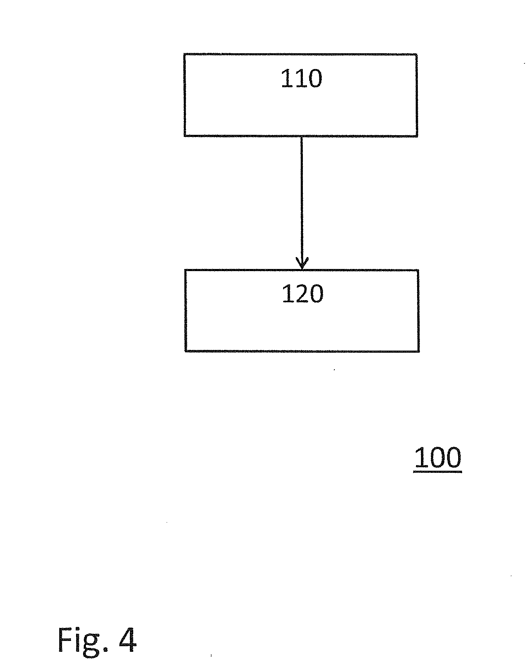

Anhand der Fig. 2 wird veranschaulicht, dass die Bildverarbeitungs-Vorrichtung 14 beschaffen ist, ein intelligentes Verfahren 100 (s. auch Fig. 4) zur Überwachung des Aufenthaltsbereichs 20 durchzuführen, bei dem ein oder mehrere Kriterien ausgewertet werden, um möglichst sicher festzustellen, ob ein Ausspäh-Versuch stattfindet oder nicht. Zur Beschreibung des Verfahrens bzw. der entsprechenden Funktion der Bildverarbeitungs-Vorrichtung wird nachfolgend auch auf die Figuren 3 und 4 Bezug genommen:

Die von der Kamera, hier Portrait-Kamera 13, aufgenommen Bilddaten erfassen den Aufenthaltsbereich 20 und werden von der Bildverarbeitungs-Vorrichtung 14 mittels einer Gesichtserkennung verarbeitet bzw. ausgewertet (s. auch Schritt 110 in Fig. 4). Dabei wird geprüft, ob mehr als ein Gesicht von der Kamera 13 erfasst wird. Ist dies der Fall, könnte bereits ein Alarm ausgelöst werden. In dem vorliegenden Ausführungsbeispiel werden aber noch weitere Kriterien geprüft, um Personen auszuschließen, die höchstwahrscheinlich keine Ausspäh-Versuche anstellen (können):

Dazu wird der Aufenthaltsbereich 20 in einen ersten Bereich 21 (Nahbereich bzw. "private Zone") und einen zweiten Bereich 22 (Fernbereich) unterteilt. In der Fig. 2 ist eine Situation dargestellt, bei der sich eine Person 2 im Nahbereich 21 unmittelbar hinter dem Benutzer 1 befindet und ebenfalls auf das Bedienfeld des Geldautomaten 10 blickt. Diese Person 2 wird von der Bildverarbeitungs-Vorrichtung 14 als potentieller Betrüger eingestuft, was wiederum das Auslösen einer Alarmmeldung 123 auf dem Bildschirm 12 bewirkt (s. Fig. 3).

Sofern sich im Nahbereich 21 nur solche Personen befinden (dargestellt durch Person 2' in Fig. 2), deren Blickrichtungen nicht auf das Bedienfeld des Geldautomaten 10 zeigen, wird dies als unkritisch eingestuft und es wird keine Alarmmeldung ausgelöst. Dasselbe gilt für die Fälle, bei denen sich fremde Personen nur im Fernbereich 22 befinden (dargestellt durch Personen 2* in Fig. 2). Solche Personen sind derart weit von dem Geldautomaten 10 entfernt, dass ein Ausspähen praktisch unmöglich ist. Als Kriterium hierfür kann ein Abstand D (s. Fig. 2) von z.B. 3 Metern vorgegeben werden, der durch eine Sensormessung (nicht dargestellt) bewertet wird, beispielsweise durch eine Messung mittels eines oder mehrerer Infrarot-Sensoren, die feststellen, in welchem Abstand die Personen (Wärmequellen) sich vor dem Geldautomaten aufhalten. Die Abstandsmessung kann alternativ oder zusätzlich auch durch die Bildverarbeitung erfolgen, indem z.B. die Größen der detektierten Gesichter und/oder die Ausleuchtung (Hell-Dunkel-Werte) miteinander verglichen werden.

Die Bildverarbeitung wird von der Bildverarbeitungs-Vorrichtung 14 durchgeführt (s. auch Fig. 1), die im vorliegenden Beispiel eine Berechnungseinheit innerhalb des Geldautomaten darstellt. Die Berechnungseinheit kann ein Standard PC (Personal Computer) sein, auf dem ebenfalls die Funktionen des Geldautomaten implementiert sind. Die Berechnungseinheit kann funktional abgeschottet von der Funktionalität des Geldautomaten sein, so dass keinerlei schadhafte Software der Berechnungseinheit einen Einfluss auf die Funktion des Geldautomaten haben kann. Die Abschottung kann durch die Implementierung in einer virtuellen Maschine oder der Verwendung einer SandBox (sog. Sandkasten) erfolgen, die jeglichen Zugriff der Berechnungseinheit auf andere Softwareschichten, wie das Betriebssystem, überprüft und notfalls verhindert. Die Berechnungseinheit bzw. Vorrichtung 14 steuert auch die auf dem Bildschirm dargestellte Anzeige von Informationen, Eingabemasken, Videos usw. (s. auch Fig. 3).

Die von der Vorrichtung 14 durchgeführte Gesichtserkennung dient im Wesentlichen dazu, festzustellen, ob sich unter den von der Portrait-Kamera 13 erfassten Objekten auch Personen befinden. Da die Personen nicht konkret erkannt bzw. klassifiziert werden müssen (z.B. nach Alter, Geschlecht oder dergleichen), reicht es aus, dass die Bilddaten auf einfache Merkmale hin geprüft werden, die ein Gesicht an sich kennzeichnen, wie z.B. Kopfform und Vorhandensein von Augen und Mund. Zum Auffinden eines Gesichts in einem Bild gibt es eine Reihe von bekannten Ansätzen, die beispielsweise in http://de.wikipedia.org/wiki/Gesichtserkennung aufgeführt sind, wie z.B. die sog. Wavelet-Analyse. Falls mehrere Gesichter erkannt wurden, wird dasjenige als das Gesicht des Benutzers 1 erkannt, welches am nächsten zur Kamera 13 ist (s. Fig. 1). Sofern mindestens zwei Gesichter erkannt werden, wird festgestellt, dass sich wenigstens eine weitere, fremde Person 2 oder 2' im Nahbereich des Benutzers 1 befindet (s. Fig. 1 und 2), so dass prinzipiell die Gefahr eines Ausspäh-Versuches besteht.

Die konkrete Gefahr wird dann als gegeben erkannt, wenn die aktuelle Blickrichtung mindestens einer fremden Person (siehe 2 in Fig. 1 und 2) auf das Bedienfeld 11 zielt. Zur Bewertung der Blickrichtung wird automatisch ein Bereich des jeweils erkannten Gesichts ausgewählt, in dem sich statistisch die Augen befinden müssten. In der Regel befinden sich die Augen lediglich im oberen Drittel eines Gesichtes, so dass eine Berechnung hierauf reduziert werden kann. Nach dem die Augenpartie detektiert wurde, kann die Blickrichtung anhand der Pupillenausrichtung der Person digital detektiert werden. Auf der Basis dieser Informationen kann beurteilt werden, ob eine Person als potentieller Betrüger bzw. Ausspäher eingestuft werden muss, oder nicht. Auch die Detektion der Augen kann durch Wavelet-Analyse erreicht werden, indem spezifische Augenmuster verwendet werden. Da der Bereich, in dem nach Augen gesucht wird, im Gegensatz zum gesamten Bild, nur sehr klein ist, liefert diese Methode brauchbare Ergebnisse in geringer Zeit, was bei einer Echtzeituntersuchung von großer Bedeutung ist. Durch eine geometrische Ableitung kann die Blickrichtung der Person bestimmt werden. Hierbei gilt es, die relativ, zum Kopf, beweglichen Augen, beziehungsweise deren Pupillen zu finden. Ein mögliches Verfahren bestimmt das Verhältnis der Augen zu der Nase und zusätzlich die Ausrichtung der Pupillen. Andere Verfahren sind denkbar. Hierzu wird auch auf die DE 10 2004 039 937 A1 verwiesen. Als weitere Literatur wird auf http://de.wikipedia.org/wiki/Blickrichtungserkennung verwiesen. Zusätzlich zum Einsatz der Kamera 13 (s. Fig. 1) kann evtl. noch eine zweite Kamera hinzugezogen werden, um so ein räumlich besseres Bild zu erlangen. Jede Kamera liefert ein geringfügig anderes Bild als die jeweils andere Kamera, so dass eine räumliche Aufnahme erreicht werden kann.

Die mindestens eine Kamera 13 ist vorzugsweise im oberen Bereich des Geldautomaten 10 installiert und ist als Live-Bild-Kamera ausgelegt, um fortlaufen Bilddaten an die Bildverarbeitungs-Vorrichtung 14 zu liefern (s. Fig. 1). Wird ein Ausspäh-Versuch erkannt, so erfolgt eine automatische Warnmeldung 123 bzw. Alarmanzeige auf dem Bildschirm 12 des Geldautomaten, um den Benutzer 1 sofort zu warnen. Außerdem wird das Kamerabild 121 angezeigt und es wird im Alarmfall das Gesicht der verdächtigen Person optisch hervorgehoben, z.B. durch Einrahmung 122 oder dergleichen. Eine Anordnung von mehreren Bildschirmen bzw. Bildschirmsegmenten zur getrennten Darstellung unterschiedlicher Informationen ist ebenfalls denkbar. Beispielsweise ist eine Darstellung der Bedienfunktionen auf einem Bildschirm und des Kamerabildes auf einem anderen Bildschirm denkbar.

Der Alarmfall kann auch die Blockierung des Geldautomaten 10 bzw. mechanische Abdeckung der Tastatur auslösen, so dass der Benutzer 1 keine Möglichkeit hat, seine PIN einzugeben. Auch kann der Alarmfall von der Berechnungseinheit 14 oder von einem damit verbundenen Rechner registriert werden (Bilddatenspeicherung, Datum Uhrzeit), um für evtl. später benötigte kriminalistische Untersuchungen zur Verfügung zu stehen. Somit stehen für den Fall, dass der Benutzer 1 nicht auf die Warnung reagieren und tatsächlich Opfer einer Ausspäh-Aktion werden sollte, diese Daten zur Verfügung.

Die vorgeschlagene Erfindung ermöglicht eine automatische Erkennung und Verifizierung von Ausspäh-Versuchen sowie eine sofortige automatische Alarmierung bzw. Warnung des Benutzers.

### Bezugszeichenliste

- 10: Selbstbedienungs-Terminal
- 11: Bedienfeld mit Tastatur
- 12: Bildschirm
- 13: Kamera, hier Portrait-Kamera oberhalb des Bildschirms
- 14: Bildverarbeitungs-Vorrichtung, hier in PC integriert

- 20: Aufenthaltsbereich für Benutzer des Selbstbedienungs-Terminals
- 21: erster Bereich ("private Zone") nahe dem Selbstbedienungs-Terminal
- 22: zweiter Bereich entfernt vom Selbstbedienungs-Terminal
- D: Abstand zum Selbstbedienungs-Terminal bzw. Grenze zwischen erstem und zweitem Bereich

- 1: Benutzer des Selbstbedienungs-Terminals
- 2: weitere Person, die den Benutzer ausspäht (im ersten Bereich)
- 2': weitere Person, die den Benutzer nicht ausspäht (auch im ersten Bereich)
- 2*: weitere Personen im zweiten Bereich

- 121: Anzeige des Kamera-Bildes
- 122: optisch hervorgehobene Bild-in-Bild-Darstellung
- 123: Alarmmeldung bzw. Warnhinweis

- 125: Bedien-Dialog
- 126: Eingabe-Feld für PIN

## Patentansprüche

1. Selbstbedienungs-Terminal (10) mit einem Bedienfeld (11) zur Bedienung des Selbstbedienungs-Terminals (10) durch einen Benutzer (1), mit einem Bildschirm (12) zur Anzeige von Informationen für den Benutzer (1) und mit mindestens einer Kamera (13) zur Überwachung eines Aufenthaltsbereichs (20), in dem sich der Benutzer (1) bei der Bedienung des Selbstbedienungs-Terminals (10) aufhält,
**dadurch gekennzeichnet, dass**
das Selbstbedienungs-Terminal (10) eine mit der Kamera (13) verbundene Bildverarbeitungs-Vorrichtung (14) aufweist, die erkennt, ob sich in dem Aufenthaltsbereich (20) des Benutzers (1) eine weitere Person (2) befindet und das Auslösen einer Alarmmeldung (123) veranlasst.

2. Selbstbedienungs-Terminal (10) nach Anspruch 1, **dadurch gekennzeichnet, dass** die Bildverarbeitungs-Vorrichtung (14) die von der Kamera (13) erzeugten Bildaufnahmen mittels einer Gesichtsdetektion verarbeitet, um Anzahl, Position, Lage und/oder Blickrichtung von detektierten Gesichtern weiterer Personen (2, 2', 2*) zu bestimmen und in Abhängigkeit davon die Alarmmeldung (123) auszulösen.

3. Selbstbedienungs-Terminal (10) nach Anspruch 1 oder 2, **dadurch gekennzeichnet, dass** die Alarmmeldung (123) auf dem Bildschirm (12) des Selbstbedienungs-Terminals (10) darstellbar ist.

4. Selbstbedienungs-Terminal (10) nach einem der vorhergehenden Ansprüche, **dadurch gekennzeichnet, dass** die von der Kamera (13) erzeugten Bildaufnahmen (121) als Bild-in-Bild-Darstellung (122) auf dem Bildschirm (12) darstellbar ist.

5. Selbstbedienungs-Terminal (10) nach Anspruch 4, **dadurch gekennzeichnet, dass**, wenn die Bildverarbeitungs-Vorrichtung (14) das Auslösen der Alarmmeldung (123) veranlasst, die Bildverarbeitungs-Vorrichtung (14)auch veranlasst, die Bild-in-Bild-Darstellung (122) optisch hervorzuheben.

6. Selbstbedienungs-Terminal (10) nach einem der vorhergehenden Ansprüche, **dadurch gekennzeichnet, dass** die Bildverarbeitungs-Vorrichtung (14) mittels der von der Kamera (13) erzeugten Bildaufnahmen bestimmt, ob weitere Personen (2, 2', 2*) sich in einem ersten Bereich (21) des Aufenthaltsbereichs (20) befinden, der näher als ein zweiter Bereich (22) des Aufenthaltsbereich (20) an dem Selbstbedienungs-Terminal liegt, um in Abhängigkeit davon die Alarmmeldung (123) auszulösen.

7. Selbstbedienungs-Terminal (10) nach einem der vorhergehenden Ansprüche, **dadurch gekennzeichnet, dass** die Kamera eine in dem Selbstbedienungs-Terminal (10) installierte und auf den Benutzer (1) ausgerichtete Portrait-Kamera (13) ist.

8. Verfahren (100) zur Überwachung eines Aufenthaltsbereichs (20), in dem sich ein Benutzer (1) bei der Bedienung eines Selbstbedienungs-Terminals (10) aufhält, wobei das Selbstbedienungs-Terminal (10) ein Bedienfeld (11) zur Bedienung des Selbstbedienungs-Terminals (10) durch den Benutzer (1) aufweist, einen Bildschirm (12) zur Anzeige von Informationen für den Benutzer (1) aufweist und mindestens eine Kamera (13) zur Überwachung des Aufenthaltsbereichs (20) aufweist,
**dadurch gekennzeichnet, dass**
das Verfahren (100) von einer mit der Kamera (13) verbundenen Bildverarbeitungs-Vorrichtung (14) durchgeführt wird, wobei erkannt wird (110), ob sich in dem Aufenthaltsbereich (20) des Benutzers (1) eine weitere Person (2) befindet, und wobei das Auslösen einer Alarmmeldung (123) veranlasst wird (120).

9. Verfahren (100) nach Anspruch 8, **dadurch gekennzeichnet, dass** die von der Kamera (13) erzeugten Bildaufnahmen mittels einer Gesichtsdetektion verarbeitet werden, um Anzahl, Position, Lage und/oder Blickrichtung von detektierten Gesichtern weiterer Personen (2, 2', 2*) zu bestimmen (110) und dass in Abhängigkeit davon die Alarmmeldung (123) ausgelöst wird (120).

10. Verfahren (100) nach Anspruch 8 oder 9, **dadurch gekennzeichnet, dass** die von der Kamera (13) erzeugten Bildaufnahmen (121) als Bild-in-Bild-Darstellung (122) auf dem Bildschirm (12) dargestellt werden, wobei bei dem Auslösen der Alarmmeldung (123) auch veranlasst wird, die Bild-in-Bild-Darstellung (122) optisch hervorzuheben.

11. Verfahren (100) nach einem der Ansprüche 8 bis 10, **dadurch gekennzeichnet, dass** mittels der von der Kamera (13) erzeugten Bildaufnahmen bestimmt wird, ob weitere Personen (2, 2', 2*) sich in einem ersten Bereich (21) des Aufenthaltsbereich (20) befinden, der näher als ein zweiter Bereich (22) des Aufenthaltsbereich (20) an dem Selbstbedienungs-Terminal liegt, um in Abhängigkeit davon die Alarmmeldung (123) auszulösen.

12. Verfahren (100) nach Anspruch 11, **dadurch gekennzeichnet, dass** mittels Vergleich von in den Bildaufnahmen erfassten Gesichtern, insbesondere mittels Vergleich von Gesichtsgröße, Bildschärfe und/oder Hell-Dunkel-Werte, bestimmt wird, ob weitere Personen (2, 2', 2*) sich in dem ersten Bereich (21) oder dem zweiten Bereich (22) des Aufenthaltsbereich (20) befinden.

13. Verfahren (100) nach Anspruch 11, **dadurch gekennzeichnet, dass** mittels einer Abstandsmessung zwischen dem Selbstbedienungs-Terminal (10) und in den Bildaufnahmen erfassten Gesichtern bestimmt wird, ob weitere Personen (2, 2', 2*) sich in dem ersten Bereich (21) oder dem zweiten Bereich (22) des Aufenthaltsbereich (20) befinden.

14. Verfahren (100) nach Anspruch 13, **dadurch gekennzeichnet, dass** die Abstandsmessung mittels eines Sensors, insbesondere Infrarot- oder Ultraschall-Sensors, durchgeführt wird.

15. Verfahren (100) nach einem der Ansprüche 9 bis 14, **dadurch gekennzeichnet, dass** die Alarmmeldung (123) ausgelöst wird, wenn die Anzahl der detektierten Gesichter, insbesondere die Anzahl der in dem ersten Bereich (21) detektierten Gesichter, zumindest den Wert 2 beträgt.

16. Verfahren (100) nach einem der Ansprüche 9 bis 15, **dadurch gekennzeichnet, dass** die Alarmmeldung (123) ausgelöst wird, wenn die Anzahl der detektierten Gesichter, insbesondere die Anzahl derjenigen detektierten Gesichter, deren Blickrichtung zum Bedienfeld (11) hin zeigt, zumindest den Wert 2 beträgt.
